# EUROPÄISCHE PATENTSCHRIFT

(11) **EP 0 560 128 B1**
(45) Veröffentlichungstag und Bekanntmachung des Hinweises auf die Patenterteilung: **01.05.1996**
(21) Anmeldenummer: 93102911.0
(22) Anmeldetag: 25.02.1993
(51) Int. Cl.: C08F 10/00, C08F 4/02, C08F 4/42

(54) **Feststoff, enthaltend chemisch gebundene Metallalkylgruppen, und seine Verwendung**
Solid material containing chemically bound alkyl metal groups and the use thereof
Matériau solide, contenant des groupes d'alcoyle-métal liés chimiquement et son application

(30) Priorität: 12.03.1992 DE 4207899
(43) Veröffentlichungstag der Anmeldung: 15.09.1993
(73) Patentinhaber: BASF Aktiengesellschaft, D-67063 Ludwigshafen (DE)
(72) Erfinder: Rohde, Wolfgang, Dr., W-6720 Speyer (DE)

(56) Entgegenhaltungen:
- FR-A- 2 312 512
- DATABASE WPI Section Ch, Week 8005, 25. September 1979 Derwent Publications Ltd., London, GB; Class A41, AN 80-08721C 'Removing polymerization inhibiting impurities from hydrocarbon(s) - by contact with organo aluminium cpd. and alkali or alkaline-earth metal hydroxide' & SU-A-662 536 (BULANOV E. A.)
- DATABASE WPI Section Ch, Week 7444, 3. Juni 1974 Derwent Publications Ltd., London, GB; Class E36, AN 74-77020V 'Removing microimpurities from gases - with metallo-organic cpds. on inert porous carrier' & SU-A-409 723 (STERLITAMAK ISOPRENE RUB)
- DATABASE WPI Section Ch, Week 7811, 2. Februar 1978 Derwent Publications Ltd., London, GB; Class A17, AN 78-20587A 'Ethylene polymer prepn. using chromium oxide catalyst - which is activated using tri:alkyl aluminium hydride carried on metal oxide or hydroxide' & JP-A-53 011 982 (MITSUBISHI PETROCHEMICAL KK)
- DATABASE WPI Section Ch, Week 8005, 25. September 1979 Derwent Publications Ltd., London, GB; Class A41, AN 80-08721C 'Removing polymerization inhibiting impurities from hydrocarbon(s) - by contact with organo aluminium cpd. and alkali or alkaline-earth metal hydroxide' & SU-A-662 536
- DATABASE WPI Section Ch, Week 7444, 3. Juni 1974 Derwent Publications Ltd., London, GB; Class E36, AN 74-77020V 'Removing microimpurities from gases - with metallo-organic cpds. on inert porous carrier' & SU-A-409 723
- DATABASE WPI Section Ch, Week 7811, 2. Februar 1978 Derwent Publications Ltd., London, GB; Class A17, AN 78-20587A 'Ethylene polymer prepn. using chromium oxide catalyst - which is activated using tri:alkyl aluminium hydride carried on metal oxide or hydroxide' & JP-A-53 011 982

## Beschreibung

### Beschreibung

Die vorliegende Erfindung betrifft einen neuen Feststoff auf der Basis
A) mindestens eines zwei- oder höherwertigen Metallalkyls und
B) eines feinteiligen, porösen und mechanisch stabilen Trägers, welcher im unbeladenen Zustand an seiner Oberfläche funktionelle Gruppen trägt, die eine chemische Bindung zwischen den Metallatomen des Metallalkyls A und der Oberfläche des Trägers bewerkstelligen können, und welcher ansonsten aber chemisch inert ist.

Feststoffe dieser Art sind beispielsweise aus der japanischen Offenlegungsschrift JP-A-53-011 982 oder der DE-A-26 23 693 bekannt.

So handelt es sich bei dem in der JP-A-53-011 982 beschriebenen Feststoff um Magnesiumoxid, Zinkoxid, Kieselgel, Magnesiumhydroxid, Aluminiumsilicat oder Magnesiumsilicat, welches mit Triethylaluminium, Tri-n-octylaluminium, Diethylaluminiumhydrid oder Isobutylaluminiumdihydrid bei 50 bis 100°C in Hexan oder Decan umgesetzt worden ist. Die resultierenden Feststoffe oder geträgerten Aluminiumverbindungen werden als Aktivatoren für Chromoxid enthaltende Phillips-Katalysatoren für die Ethylenpolymerisation verwendet. Damit indes die Aluminiumalkylverbindungen ihren bekannten Aktivierungseffekt entfalten können, müssen sie mit dem Chromoxid des Phillips-Katalysators reagieren. Hieraus folgt physikalisch zwingend, daß der Feststoff der JP-A-53-011 982 keine oder nur sehr wenig immobilisierte Aluminiumalkyle enthalten darf, ansonsten fände der für die Aktivierung essentielle Stoffaustausch zwischen dem Feststoff und dem Phillips-Katalysator ja nicht mehr statt. Hinsichtlich eines Reinigungseffektes des Feststoffs ist der JP-A-53-011 982 nichts zu entnehmen.

Der in der DE-A-26 23 693 beschriebene Feststoff basiert ebenfalls auf Trägern wie Tonerde, Tonerdehydrat, Kieselsäure, Aluminiumsilicat und Magnesiumsilicat und zusätzlich noch Calciumcarbonat, Magnesiumcarbonat oder ein Polyolefinpulver, welche mit mindestens einer flüssigen Aluminiumalkylverbindung mit einem Dampfdruck unter 1 mm/80°C wie Tri-n-octylaluminium imprägniert sind. Diese Feststoffe werden als Cokatalysatoren für die (Co)Polymerisation von α-Monoolefinen in der Gasphase mittels übergangsmetallhaltiger Ziegler- oder Phillips-Katalysatoren verwendet. Auch bei diesem Anwendungszweck ist es aus physikalischen und chemischen Gründen zwingend notwendig, daß die Aluminiumalkylverbindungen von den Feststoffen auf die Ziegler- oder Phillips-Katalysatoren übertragen werden, damit sie ihre cokatalytische Wirkung entfalten können. Dies setzt aber voraus, daß die Aluminiumalkylverbindungen nicht immobilisiert, sprich chemisch gebunden, in den Feststoffen vorliegen. Auch der DE-A-26 23 692 läßt sich über einen Reinigungseffekt der darin beschriebenen Feststoffe nichts entnehmen.

Hiervon abgesehen stellt die Verwendung dieser Aktivatoren oder Cokatalysatoren einen verfahrenstechnischen Nachteil dar, weil sie in sehr konstantem Verhältnis zu den verwendeten Phillips- oder Ziegler-Katalysatoren zudosiert werden müssen, um auch wirklich die optimale aktivierende oder cokatalytische Wirkung zu entfalten. Wegen den in technischen Polymerisationsanlagen auftretenden Schwankungen in der Qualität der Ausgangsstoffe wird jedoch ein nicht im voraus bestimmbarer Teil der jeweils angewandten Aktivator- oder Cokatalysatormenge durch Reaktion mit Verunreinigungen in den Ausgangsstoffen dem eigentlichen Verwendungszweck - der Einwirkung auf den Phillips- oder Zieger-Katalysator - entzogen. Erschwerend kommt hinzu, daß Verunreinigungen der unterschiedlichsten Art wie Sauerstoff oder Acetylene bereits in geringsten Mengen als Katalysatorgifte wirken und nicht nur die Ausbeute, sondern auch die Produkteigenschaften der hergestellten (Co)Polymerisate in erheblichem Umfang beeinträchtigen können. Dies ist insbesondere bei Phillips-Katalysatoren der Fall, welche geträgerte metallorganische Chromverbindungen wie Chromocen aufweisen und bereits ohne Zugabe von Aktivatoren oder Cokatalysatoren katalytisch hochaktiv sind.

Zwar bewirken die aus der JP-A-53-011 982 und der DE-A-26 23 693 bekannten Feststoffe einen Reinigungseffekt, wie er auch durch die Zugabe gelöster oder flüssiger Metallalkyle A in den Reaktor bewirkt wird, indes hat die Wechselwirkung dieser Aktivatoren oder Cokatalysatoren auch eine Veränderung der Eigenschaften der Ziegler- und Phillips-Katalysatoren und damit auch der hiermit hergestellten (Co) Polymerisate zur Folge. Diesen Veränderungen stände an und für sich nichts entgegen, fänden sie in vorhersagbarer Weise statt. Dies ist indes aufgrund der Schwankungen der Katalysatorgiftkonzentration und -zusammensetzung nicht immer der Fall.

Aufgabe der vorliegenden Erfindung ist es, einen neuen Feststoff der eingangs genannten Art zu finden, welcher die Nachteile des Standes der Technik nicht mehr länger aufweist und welcher sich für die Reinigung flüssiger und gasförmiger Stoffe sowie von chemischen Reaktoren, in denen luft- und/ oder wasserempfindliche Stoffe miteinander umgesetzt werden, von Verunreinigungen auch im ppm-Bereich eignet.

Diese Aufgabe wurde im wesentlichen durch die Immobilisierung der eingangs genannten Metallalkyle A auf den eingangs genannten feinteiligen, porösen und mechanisch stabilen Trägern B gelöst. Im Hinblick auf den Stand der Technik war es nicht zu erwarten gewesen, daß aufgrund dieser Maßnahme neue Feststoffe resultieren, welche die Nachteile der bislang bekannten nicht mehr aufweisen und sich u.a. hervorragend als Reinigungsmittel insbesondere für Anlagen zur (Co)Polymerisation von Olefinen in der gewirbelten oder gerührten Gasphase oder in der Suspension eignen und dabei nicht die Eigenschaften der in diesen Anlagen vorhandenen Ziegler- oder Phillips-Katalysatoren verändern.

Demgemäß wurde ein neuer Feststoff auf der Basis
A) mindestens eines zwei- oder höherwertigen Metallalkyls und
B) eines feinteiligen, porösen und mechanisch stabilen Trägers, welcher im unbeladenen Zustand an seiner Oberfläche funktionelle Gruppen trägt, die eine chemische Bindung zwischen den Metallatomen des Metallalkyls A und der Oberfläche des Trägers bewerkstelligen können, und welcher ansonsten aber chemisch inert ist,
gefunden, welcher dadurch gekennzeichnet ist, daß hierin
a) die von den Metallalkylen A herrührenden Metallatome chemisch an die Oberfläche des Trägers B gebunden sind,
b) noch Metallalkylgruppen vorliegen und
c) kein Metallalkyl mehr vorhanden ist, welches mit Hilfe eines inerten organischen Lösungsmittels für Metallalkyle A extrahiert werden könnte.

Im folgenden wird dieser neuer Feststoff auf der Basis der Metallalkyle A und der Träger B der Kürze halber als "erfindungsgemäßer Feststoff" bezeichnet.

Für den erfindungsgemäßen Feststoff ist es wesentlich, daß die von den Metallalkylen A herrührenden Metallatome chemisch an die Oberfläche des Trägers B gebunden sind. Hierfür kommen alle Element-Metall-Bindungen in Betracht, welche unter den Bedingungen, unter denen der erfindungsgemäße Feststoff gehandhabt und angewandt wird, thermodynamisch und/ oder kinetisch stabil sind. Beispiele geeigneter Element-Metall-Bindungen sind Stickstoff- oder Sauerstoff-Metall-Bindungen, von denen die Sauerstoff-Metall-Bindungen vorteilhaft sind und deshalb bevorzugt werden.

Erfindungsgemäß ist es von Vorteil, wenn die Metallatome des Metallalkyls A in dem erfindungsgemäßen Feststoff in einer Menge von 10 bis 100 mol-%, bezogen auf die ursprünglich an der Oberfläche des Trägers B vorhandenen funktionellen Gruppen, chemisch gebunden vorliegen. Zwar ist es denkbar, Metallatome in einer Menge von mehr als 100 mol-% auf der Oberfläche des Trägers B chemisch zu binden, beispielsweise über Metall-Metall-Bindungen, indes besteht dann die Gefahr, daß die betreffenden Metallalkyle A nicht mehr unter allen Bedingungen der Handhabung und der Verwendung der Feststoffe immobilisiert bleiben. Andererseits empfiehlt es sich nicht, geringere Mengen als 10 mol-% anzuwenden, weil ansonsten der Reinigungseffekt der betreffenden Feststoffe in vielen Fällen zu wünschen übrig läßt. Demgemäß handelt es sich bei dem Bereich von 10 bis 100 mol-% um einen optimalen Bereich, innerhalb dessen die Konzentration der auf der Oberfläche des Trägers B gebundenen Metallatome frei gewählt und dem jeweiligen Verwendungszweck in einfacher Weise angepaßt werden kann. Innerhalb dieses optimalen Bereichs ist derjenige von 80 bis 100 mol-% hervorzuheben, weil erfindungsgemäße Feststoffe, welche die Metallatome des Metallalkyls A in dieser Menge enthalten, besonders günstige anwendungstechnische Vorteile haben.

Für den erfindungsgemäßen Feststoff ist es außerdem wesentlich, daß in ihm noch Metallalkylgruppen vorliegen. Hierbei ist es erfindungsgemäß von Vorteil, wenn er die an Metallatome gebundenen Alkylgruppen in einer Menge von 10 bis 75 mol-%, bezogen auf die ursprünglich im Metallalkyl A vorhandenen Alkylgruppen, enthält. Zwar ist es durchaus möglich, daß der erfindungsgemäße Feststoff mehr als 75 mol-% dieser Alkylgruppen enthält, indes besteht dann die Gefahr, daß noch schwach oder gar nicht immobilisiertes Metallalkyl A zugegen ist. Die Gegenwart von nicht immobilisiertem Metallalkyl A ist indes erfindungsgemäß zu vermeiden. Andererseits ist es durchaus denkbar, geringere Mengen als 10 mol-% anzuwenden. Indes lassen dann die anwendungstechnischen Eigenschaften, insbesondere die Reinigungswirkung, der betreffenden Feststoffe deutlich zu wünschen übrig. Demnach handelt es sich bei dem Bereich von 10 bis 75 mol-% um einen optimalen Bereich, innerhalb dessen der Gehalt der an Metallatome gebundenen Alkylgruppen im erfindungsgemäßen Feststoff breit variiert und dem jeweiligen Verwendungszweck in einfacher Weise optimal angepaßt werden kann. Innerhalb dieses optimalen Bereichs ist derjenige von 25 bis 75 mol-% hervorzuheben, weil erfindungsgemäße Feststoffe, welche die Alkylgruppen in dieser Menge enthalten, ein ganz besonders ausgewogenes Eigenschaftsprofil aufweisen.

Für den erfindungsgemäßen Feststoff ist es des weiteren wesentlich, daß in ihm kein Metallalkyl A mehr vorhanden ist, welches mit Hilfe eines inerten organischen Lösungsmittels für Metallalkyle A extrahiert werden könnte. Als inerte organische Lösungsmittel kommen hierbei alle üblichen und bekannten Lösungsmittel in Betracht, welche nicht mit Metallalkylen A reagieren wie z.B. aliphatische, aromatische und aliphatisch-aromatische Kohlenwasserstoffe. Beispiele geeigneter Kohlenwasserstoffe dieser Art sind Pentan, Hexan, Heptan, Cyclohexan, Methylcyclohexan, Octan, Nonan, Decan, Undecan, Dodecan, Tridecan, Pentadecan, Hexadecan, Heptadecan, Octadecan, Nonadecan und Eicosan sowie deren Gemische, Petrolether, Ligroin, Benzine, mineralische Öle, Benzol, Toluol, Ethylbenzol und Cumol. Erfindungsgemäß muß das Vorhandensein solcher nicht immobilisierter Metallalkyle A in dem erfindungsgemäßen Feststoff strikt vermieden werden, um die eingangs geschilderten Nachteile zu vermeiden.

Die eine wesentliche Basis des erfindungsgemäßen Feststoffs bildet mindestens ein zwei- oder höherwertiges Metallalkyl. Demgemäß sind alle Metallalkyle von 2-, 3-, 4- und 5-wertigen Metallen, insbesondere aber die Alkyle der 2-, 3- und 4-wertigen Metalle geeignet. Beispiele gut geeigneter Metallalkyle A sind die Alkylverbindungen von Beryllium, Magnesium, Calcium, Strontium, Barium, Zink, Bor, Aluminium, Gallium, Indium, Thallium, Silicium, Germanium, Zinn und Blei. Von diesen sind die Alkylverbindungen von Zink, Bor, Aluminium und Silicium besonders vorteilhaft und werden deshalb ganz besonders bevorzugt verwendet. Hiervon sind wiederum die Alkylverbindungen des Aluminiums hervorzuheben, welche für die Herstellung des erfindungsgemäßen Feststoffs ganz besondere Vorteile bieten und deshalb ganz besonders bevorzugt angewandt werden.

Im allgemeinen weisen die Alkylgruppen der Metallalkyle A 1 bis 20 Kohlenstoffatome auf. Hiervon sind Alkylgruppen mit 2 bis 8 Kohlenstoffatomen wie Ethyl, Propyl, Isopropyl, n-Butyl, Iosbutyl, n-Pentyl, n-Hexyl, Heptyl, Octyl und 2-Methylhexyl sowohl Cylohexyl und Methylcyclohexyl ganz besonders vorteilhaft und kommen deshalb ganz besonders bevorzugt zur Anwendung.

Beispiele für Metallalkyle A, welche für die Herstellung des erfindungsgemäßen Festkörpers ganz besonders bevorzugt verwendet werden, sind Triethylaluminium, Tri-n-butylaluminium und Tri-n-octylaluminium.

Die Metallalkyle A sind an sich bekannte und im Handel erhältliche Verbindungen.

Die weitere wesentliche Basis des erfindungsgemäßen Feststoffs bildet der feinteilige, poröse und mechanisch stabile Träger B. Im allgemeinen hat dieser Träger B eine mittlere Korngröße von 1 µm bis 1 mm, vorzugsweise 10 bis 100 µm, insbesondere 20 bis 50 µm. Vorteilhafterweise hat er eine spezifische Oberfläche nach BET von 10 bis 1000 m/g. Vorteilhafterweise liegt sein Porenvolumen bei 0,1 bis 5 ml/g. Der Träger B bzw. die Körnchen aus denen er besteht, sind abriebfest, was für die Verwendung des erfindungsgemäßen Feststoffs in einer gewirbelten oder gerührten Gasphase oder in einer Suspension mit turbulenter Strömung von hoher Bedeutung ist, und werden auch nicht bei der Lagerung unter dem Einfluß ihres Eigengewichts geschädigt.

Der erfindungsgemäß anzuwendende Träger B trägt im unbeladenen, d.h. metallalkylfreien, Zustand an seiner Oberfläche funktionelle Gruppen, welche eine chemische Bindung zwischen den Metallatomen des Metallalkyls A und der Oberfläche des Trägers bewerkstelligen können. Dies bedeutet, daß an der Oberfläche des Trägers B eine chemische Reaktion stattfindet, wenn man diesen und die Metallalkyle A zusammenbringt. Indes ist es für den erfindungsgemäßen Feststoff wesentlich, daß der Träger B nur an seiner Oberfläche mit den Metallalkylen A reagiert, ansonsten aber chemisch inert gegenüber diesen ist.

Grundsätzlich können alle funktionellen Gruppen zur Anwendung kommen, solange sie in der Lage sind, mit den Metallatomen der Metallalkyle A chemische Bindungen einzugehen, welche unter den Bedingungen der Herstellung und der Verwendung des erfindungsgemäßen Feststoffs stabil sind. Erfindungsgemäß ist es von Vorteil, funktionelle Gruppen auszuwählen, welche Sauerstoff-Metall- oder Stickstoff-Metall-Bindungen bilden. Hierfür kommen vor allem diejenigen funktionellen Gruppen in Betracht, welche aktiven Wasserstoff enthalten. Beispiele gut geeigneter Gruppen dieser Art sind Carbonsäure-, Sulfonsäure-, Phosphonsäure-, saure Phosphorsäureester-, Hydroxy- und primäre und sekundäre Aminogruppen. Von diesen gut geeigneten funktionellen Gruppen weist die Hydroxygruppe besondere Vorteile auf. Sie wird deshalb ganz besonders bevorzugt verwendet.

Als Träger B kommen alle polymeren organischen oder polymeren und/oder kristallinen anorganischen Stoffe in Betracht, wenn sie das vorstehend genannte Eigenschaftsprofil aufweisen. Beispiele geeigneter, als Träger B verwendbarer Stoffe sind modifizierte und unmodifizierte Cellulose und Stärke, modifiziertes und unmodifiziertes Lignin, Carbonsäure-, Sulfonsäure-, Phosphonsäure-, saure Phosphorsäureester-, Hydroxy- und/oder primäre und/oder sekundäre Aminogruppen enthaltende synthetische Polymere auf der Basis von Polyethylen und Ethylencopolymerisaten, Polypropylen und Propylencopolymerisaten, Vinylchloridcopolymerisaten, Polystyrol und Styrolcopolymerisaten, Polyphosphazenen, Polyamiden, Polycarbonaten, Polyalkylenterephthalaten, Polyphenylenoxiden, Polysulfonen, Polyphenylensulfiden, Polyarylsulfonen, Polyethersulfonen, Polyarylethern, Phenol-Formaldehyd-Kunststoffen (Phenoplaste), Harnstoff-Formaldehyd-Kunststoffen (Aminoplaste), Melamin-Formaldehyd-Kunststoffen, Melamin-Phenol-Formaldehyd-Kunststoffen, Siliconen, Polyimiden, Epoxidharzen oder vernetzten Polyurethanen sowie Aluminiumoxide, Aluminiumoxidhydrate, Aluminiumphosphate, Kieselsäure, Metallsilicate und Titan-, Zirkon- und Hafniumdioxid. Von diesen Stoffen sind Aluminiumoxid, Kieselsäure, Aluminiumsilicat und Aluminiumphosphat besonders vorteilhaft und werden deshalb besonders bevorzugt als Träger B angewandt. Beispiele besonders gut geeigneter Stoffe dieser Art, welche sich für den genannten Verwendungszweck ganz besonders gut bewährt haben, sind aus der DE-A-24 55 353, der US-A-4 845 176, der US-A-4 364 842, der EP-A-0 215 336 oder der US-A-4 146 695 bekannt.

Der erfindungsgemäße Feststoff kann aus den vorstehend im Detail beschriebenen Metallalkylen A und den Trägern B in beliebiger Weise hergestellt werden. Erfindungsgemäß ist es indes von Vorteil, den erfindungsgemäßen Feststoff nach dem erfindungsgemäßen Verfahren herzustellen.

Das erfindungsgemäße Verfahren geht von dem Verfahrensschritt 1, dem Auftragen eines flüssigen oder gelösten Metallalkyls A auf den trockenen oder in einem geeigneten Suspensionsmittel suspendierten Träger B aus. Beispiele geeigneter Suspensionsmittel sind die vorstehend genannten Lösungsmittel für die Metallalkyle A.

Nach dem Auftragen der Metallalkyle A auf die Träger B werden die resultierenden Feststoffe im Verfahrensschritt 2 isoliert, im Verfahrensschritt 3 mit den vorstehend genannten Lösungs- oder Suspensionsmitteln gewaschen und im Verfahrensschritt 4 getrocknet.

Methodisch gesehen weisen diese Verfahrensschritte keine Besonderheiten auf, sondern sie können in den üblichen und bekannten Anlagen durchgeführt werden, wie sie bekanntermaßen für die Handhabung und die Umsetzung von Metallalkylen A verwendet werden.

Für das erfindungsgemäße Verfahren ist es indes wesentlich, daß man vor der Durchführung des Verfahrensschritts 1 die Konzentration der vorstehend beschriebenen funktionellen Gruppen an der Oberfläche des Trägers B bestimmt. Dies kann sowohl spektroskopisch unter Zuhilfenahme der üblichen und bekannten spektroskopischen Methoden wie Infrarotspektroskopie oder auch chemisch erfolgen. Für die chemische Bestimmung der funktionellen Gruppen können die unterschiedlichsten üblichen und bekannten Methoden angewandt werden. Enthalten die funktionellen Gruppen indes aktiven Wasserstoff, ist es erfindungsgemäß von Vorteil, ihre Konzentration durch Umsetzung mit einem geeigneten Metallalkyl unter Messung der hierbei resultierenden Gasmenge zu bestimmen. Beispiele geeigneter Metallalkyle sind Ethyllithium und Triethylaluminium. Einerseits ist die bei dieser Umsetzung freiwerdende Ethanmenge ein direktes Maß der Anzahl der ursprünglich vorhandenen funktionellen Gruppen, andererseits kann anhand des zeitlichen Verlaufs der Ethanentwicklung der Ablauf der Reaktion verfolgt und ihr Ende bestimmt werden.

Erfindungsgemäß wird anhand der in dieser Weise ermittelten Konzentration der funktionellen Gruppen im Träger B die Menge der Metallalkyle A festgelegt, welche zur Umsetzung gebracht werden. Erfindungsgemäß sind dies 10 bis 100, vorzugsweise 50 bis 100 und insbesondere 80 bis 100 mol-%, bezogen auf die ermittelte Anzahl der funktionellen Gruppen. Im allgemeinen empfiehlt es sich nicht, weniger als 50 mol-% an Metallalkylen A anzuwenden, weil ansonsten die Konzentration der Metallalkylgruppen in den betreffenden Feststoffen zu gering für die praktische Anwendung ist. Andererseits ist davon abzuraten, mehr als 100 mol-% an Metallalkylen A für die Umsetzung zu verwenden, weil dies in den allermeisten Fällen eine aufwendige Nachreinigung notwendig macht. Werden indes die Metallalkyle A in Mengen angewandt, welche innerhalb des breiten optimalen Bereichs, vor allem aber innerhalb der Vorzugsbereiche, liegen, resultieren erfindungsgemäße Feststoffe von besonders ausgewogenem anwendungstechnischem Eigenschaftsprofil.

Erfindungsgemäß wird des weiteren nach dem Verfahrensschritt 4 überprüft, ob in den erhaltenen Feststoffen noch extrahierbare Metallalkyle A vorhanden sind. Dies kann in üblicher und bekannter Weise dadurch geschehen, daß die Feststoffe während einer längeren Zeit bei höheren Temperaturen mit einem der vorstehend genannten Lösungsmittel für Metallalkyle A behandelt werden. Nach Abtrennen des Lösungsmittels wird dieses mit schwach angesäuertem Wasser extrahiert. Anschließend wird der Aluminiumgehalt der resultierenden wäßrigen Phase bestimmt. Sollte diese Untersuchung ergeben, daß - wider Erwarten - noch extrahierbares Metallalkyl A in den Feststoffen vorhanden war, sind die Verfahrensschritte 3 und 4 - im Bedarfsfall mehrmals - zu wiederholen. Alternativ hierzu kann das noch vorhandene extrahierbare Metallalkyl A durch zusätzlichen Träger B, welcher den Feststoffen zugesetzt wird, gebunden werden. Dies kann analog zum Verfahrensschritt 1 durch Vermischen trockener Träger B und trockener Feststoffe oder in Suspension erfolgen. Vorteilhafterweise werden zu diesem Zweck die Träger B verwendet, welche bereits der Herstellung der Feststoffe dienten.

Die erfindungsgemäßen Feststoffe, insbesondere die nach dem erfindungsgemäßen Verfahren erhaltenen, sind abriebfest und mechanisch stabil und eignen sich hervorragend für die Reinigung flüssiger und gasförmiger Stoffe sowie von chemischen Reaktoren, in denen luft- und/oder wasserempfindliche Stoffe miteinander umgesetzt werden. Hierbei weisen sie gegenüber anderen Reinigungsmitteln den Vorteil auf, daß sie die unterschiedlichsten Verunreinigung auch im ppm-Bereich noch beseitigen, wonach sie in einfacher Weise wieder von den flüssigen oder gasförmigen Stoffen abgetrennt und den Reaktoren wieder entnommen werden können.

Flüssige und feste Stoffe, welche besonders gut auf die Reinigungswirkung der erfindungsgemäßen Feststoffe ansprechen, sind die vorstehend genannten inerten Lösungsmittel oder Suspendiermittel, Inertgase, Wasserstoff sowie polymerisierbare ethylenisch ungesättigte Gruppen enthaltende Monomere. Bei den Reaktoren handelt es sich vor allem um Anlagen zur (Co)Polymerisation von solchen Monomeren. Hier eignen sich die erfindungsgemäßen Feststoffe vor allem zur Reinigung von Anlagen, welche zur (Co)Polymerisation von Olefinen in der gewirbelten oder gerührten Gasphase oder in der Suspension.

Bekanntermaßen führt man bei diesem Verfahren zur Herstellung von Homo- und Copolymerisaten von α-Olefinen das betreffende Monomere oder die betreffenden Monomeren dem Reaktor kontinuierlich oder diskontinuierlich zu. Die (Co)Polymerisation des oder der Monomeren wird üblicherweise bei Temperaturen von 60 bis 125°C und Drücken von 5 bis 70 bar mittels eines übergangsmetallhaltigen Katalysators durchgeführt. Hierfür kommen alle üblichen und bekannten Phillips- und Ziegler-Katalysatoren in Betracht, wie sie beispielsweise im eingangs genannten Stand der Technik und in der US-A-4 532 311 oder der US-A-3 709 853 beschrieben werden. Hiervon sind die geträgerten Chrom(II)-Verbindungen wie Bis-(cyclopentadienyl)chrom(II) besonders vorteilhaft, weil sie ohne einen zusätzlichen Aktivierungsschritt und ohne Zugabe von Cokatalysatoren direkt für die (Co)Polymerisation verwendet werden können. Demnach kann die (Co)Polymerisation sowohl in Anwesenheit als auch in Abwesenheit eines Cokatalysators durchgeführt werden. Als Cokatalysatoren kommen grundsätzlich alle der vorstehend genannten Metallalkyle A, insbesondere aber die Alkylverbindungen des Aluminiums, sowie die eingangs erwähnten geträgerten Cokatalysatoren in Betracht. Darüber hinaus kann auch noch ein metallalkylfreier, feinteiliger, inerter Feststoff bei der (Co)Polymerisation zugegen sein. Weitere zusätzliche Additive, welche im Bedarfsfall dem Reaktor zudosiert werden können, sind Molekulargewichtsregler wie Wasserstoff und Antistatika (vgl. die US-A-4 532 311). Die (Co)Polymerisation kann in der gewirbelten oder gerührten Gasphase in einem durchmischten Schüttgutbett aus kleinteiligem (Co)Polymerisat oder in Suspension in einem der vorstehend genannten Suspensionsmittel oder in Isobutan durchgeführt werden. Wird die (Co)Polymerisation in Suspension durchgeführt, herrscht in der Reaktionszone eine turbulente Strömung. Verfahren dieser Art sind üblich und bekannt und werden beispielsweise in der US-A-4 532 311, der EP-A-0 021 605 oder EP-A-0 005 215 beschrieben. Je nachdem, ob man diese Verfahren kontinuierlich oder diskontinuierlich betreibt, werden die resultierenden (Co)Polymerisate kontinuierlich aus dem Reaktor ausgetragen oder nach Beendigung der Reaktion dem Reaktor entnommen.

Der erfindungsgemäße Feststoff kann den Anlagen oder Reaktoren vor der Durchführung dieser Verfahren oder während der (Co)Polymerisation zudosiert werden. In beiden Fällen entfaltet der erfindungsgemäße Feststoff seine hervorragende Reinigungswirkung. Überraschenderweise beeinflußt er auch nicht die katalytische Aktivität der jeweils verwendeten Phillips- oder Ziegler-Katalysatoren, wenn er während der (Co)Polymerisation den Reaktoren zudosiert wird. Gleichzeitig bleibt aber seine Reinigungswirkung in vollem Umfang erhalten. Dies hat zur Folge, daß die kontinuierlichen Verfahren über vergleichsweise lange Zeiträume hinweg bei ausgesprochen stabilen Reaktionsbedingungen (Co) Polymerisate von praktisch ein und demselben Eigenschaftsprofil liefern. Im Falle eines diskontinuierlichen Verfahrens bewirkt der erfindungsgemäße Feststoff, daß auch bei zahlreichen Wiederholungen die Eigenschaftsprofile der jeweils resultierenden (Co)Polymerisate praktisch keine Abweichungen voneinander zeigen.

### Beispiel

Die Herstellung eines erfindungsgemäßen Feststoffs und seine Verwendung bei der Homopolymerisation von Ethylen

### Versuchsvorschrift:

Zu einer Lösung von 0,1 mol Triethylaluminium in 400 ml Heptan wurden über einen Pulvertrichter unter Inertgas portionsweise insgesamt 64,6 g eines bei 150°C im Vakuum während 6 Stunden getrockneten Kieselgels zudosiert. Verwendet wurde das Kieselgel vom Typ 332 der Firma Grace, Worms, in Korngrößen von 10 bis 125 µm (mittlere Korngröße: 55 µm) einer spezifischen Oberfläche von 320 m/g und eines Porenvolumens von 1,8 ml/g. Die Konzentration der Hydroxygruppen an der Oberfläche des getrockneten Kieselgels lag bei 2,2 · 10⁻³ mol/g (bestimmt durch die Umsetzung des Kieselgels mit Triethylaluminium im Überschuß).

Nach beendeter Reaktion ließ sich im Heptan kein gelöstes Triethylaluminium mehr nachweisen. Der erfindungsgemäße Feststoff wurde daraufhin abfiltriert und im Vakuum bei Raumtemperatur getrocknet.

1,45 g des erfindungsgemäßen Feststoffs wurden in 200 ml Heptan resuspendiert und unter Luftausschluß während 20 Mininten auf 80°C erwärmt. Hiernach wurden der Suspension 10 ml Heptan heiß entnommen und mit 10 ml schwach angesäuertem Wasser extrahiert. In der hierbei resultierenden klaren wäßrigen Lösung wurde der Aluminiumgehalt mit Indikatorteststäbchen der Firma Merck zu 0 ppm bestimmt. Demnach enthielt der erfindungsgemäße Feststoff kein extrahierbares Metallalkyl A mehr.

Für die Polymerisation des Ethylens wurden in einem 1 l-Autoklaven 500 ml trockenes, mit Argon gespültes Heptan vorgelegt und auf 70°C erwärmt. Anschließend wurden 3 g des erfindungsgemäßen Feststoffs dem Autoklaven zindosiert. Hiernach wurden 0,25 bar Wasserstoff und anschließend ungereinigtes Ethylen, welches neben den üblichen Verunreinigungen wie Acetylen noch 4 ppm Sauerstoff als Katalysatorgift enthielt, bis zu einem Gesamtdruck von 30 bar aufgepreßt. Nach Zugabe von 94,6 mg eines üblichen und bekannten Katalysators [verwendet wurde auf Kieselsäure geträgertes Bis-(cyclopentadienyl)chrom(II) gemäß der US-A-3 709 853] sprang die Polymerisation sofort an. Nach 90 Minuten Polymerisationszeit wurden 165 g Polyethylen erhalten.

### Vergleichsversuch A

Das Beispiel wurde wiederholt, nur daß die Zugabe des erfindungsgemäßen Feststoffs zum Autoklaven unterblieb. Nach Zugabe des Katalysators setzte keine Polymerisation ein; der Versuch wurde nach 90 Minuten erfolglos abgebrochen.

## Patentansprüche

1. Feststoff auf der Basis
A) mindestens eines zwei- oder höherwertigen Metallalkyls und
B) eines feinteiligen, porösen und mechanisch stabilen Trägers, welcher im unbeladenen Zustand an seiner Oberfläche funktionelle Gruppen trägt, die eine chemische Bindung zwischen den Metallatomen des Metallalkyls A und der Oberfläche des Trägers bewerkstelligen können, und welcher ansonsten aber chemisch inert ist,
dadurch gekennzeichnet, daß in dem Feststoff
a) die von den Metallalkylen A herrührenden Metallatome chemisch an die Oberfläche des Trägers B gebunden sind,
b) noch Metallalkylgruppen vorliegen und
c) kein Metallalkyl mehr vorhanden ist, welches mit Hilfe eines inerten organischen Lösungsmittels für Metallalkyle A extrahiert werden könnte.

2. Der Feststoff nach Anspruch 1, dadurch gekennzeichnet, daß er die Metallatome des Metallalkyls A in einer Menge von 10 bis 100 mol-%, bezogen auf die ursprünglich an der Oberfläche des Trägers A vorhandenen funktionellen Gruppen, chemisch gebunden enthält.

3. Der Feststoff nach einem der Ansprüche 1 oder 2, dadurch gekennzeichnet, daß es sich bei den Metallalkylen A um Alkylverbindungen von Beryllium, Magnesium, Calcium, Strontium, Barium, Zink, Bor, Aluminium, Gallium, Indium, Thallium, Silicium, Germanium, Zinn und Blei handelt.

4. Der Feststoff nach einem der Ansprüche 1 bis 3, dadurch gekennzeichnet, daß es sich bei den an der Oberfläche des Trägers B vorhandenen funktionellen Gruppen um aktiven Wasserstoff enthaltende Gruppen handelt.

5. Der Feststoff nach Anspruch 4, dadurch gekennzeichnet, daß es sich bei den funktionellen Gruppen um Carbonsäure-, Sulfonsäure-, Phosphonsäure-, Phosphorsäure-, Hydroxy- oder primäre oder sekundäre Aminogruppen handelt.

6. Der Feststoff nach einem der Ansprüche 1 bis 5, dadurch gekennzeichnet, daß der Träger B eine mittlere Korngröße im Bereich von 10 µm bis 1,0 mm aufweist.

7. Der Feststoff nach einem der Ansprüche 1 bis 6, dadurch gekennzeichnet, daß es sich bei den Trägern B um polymere organische oder polymere und/oder kristalline anorganische Stoffe handelt.

8. Der Feststoff nach Anspruch 7, dadurch gekennzeichnet, daß es sich bei den polymeren organischen Stoffen um modifizierte oder unmodifizierte Cellulose oder Stärke, modifiziertes oder unmodifiziertes Lignin, Carbonsäure-, Sulfonsäure-, Phosphonsäure-, saure Phosphorsäureester-, Hydroxy- und/oder primäre oder sekundäre Aminogruppen enthaltende synthetische Polymere und bei den polymeren und/oder kristallinen anorganischen Stoffen um Aluminiumoxide, Aluminiumoxidhydrate, Aluminiumphosphate, Kieselsäure, Metallsilicate oder Titan-, Zirkon- oder Hafniumdioxid handelt.

9. Verwendung der Feststoffe gemäß einem der Ansprüche 1 bis 8 zur Reinigung flüssiger und gasförmiger Stoffe sowie von chemischen Reaktoren, in denen luft- und/oder wasserempfindliche Stoffe miteinander umgesetzt werden.

10. Verfahren zur Herstellung eines Feststoffs gemäß Anspruch 1 auf der Basis
A) mindestens eines zwei- oder höherwertigen Metallalkyls und
B) eines feinteiligen, porösen und mechanisch stabilen Trägers, welcher im unbeladenen Zustand an seiner Oberfläche funktionelle Gruppen trägt, die eine chemische Bindung zwischen den Metallatomen des Metallalkyls A und der Oberfläche des Trägers bewerkstelligen können, und welcher ansonsten aber chemisch inert ist,
durch
1) Auftragen mindestens eines flüssigen oder gelösten Metallalkyls A auf den trockenen oder suspendierten Träger B,
2) Isolieren,
3) Waschen und
4) Trocknen des resultierenden Feststoffs,
dadurch gekennzeichnet, daß man
α) vor dem Verfahrensschritt 1 die Konzentration der funktionellen Gruppen an der Oberfläche des Trägers B spektroskopisch und/oder chemisch bestimmt,
β) im Verfahrensschritt 1 10 bis höchstens 100 mol %, bezogen auf die ermittelte Anzahl der funktionellen Gruppen, an Metallalkyl A zur Umsetzung bringt und
γ) nach dem Verfahrensschritt 4 überprüft, ob in dem erhaltenen Feststoff noch extrahierbares Metallalkyl A vorhanden ist und, wenn dies der Fall ist, die Verfahrensschritte 3 und 4 - im Bedarfsfall mehrmals - wiederholt oder das extrahierbare Metallalkyl A mit einem Träger B bindet, welcher zum Feststoff hinzugegeben wird.

11. Das Verfahren nach Anspruch 10, dadurch gekennzeichnet, daß es sich bei den Metallalkylen A um Alkylverbindungen von Beryllium, Magnesium, Calcium, Strontium, Barium, Zink, Bor, Aluminium, Gallium, Indium, Thallium, Silicium, Germanium, Zinn und Blei handelt.

12. Das Verfahren nach einem der Ansprüche 10 bis 11, dadurch gekennzeichnet, daß es sich bei den an der Oberfläche des Trägers B vorhandenen funktionellen Gruppen um aktiven Wasserstoff enthaltende Gruppen handelt.

13. Das Verfahren nach Anspruch 12, dadurch gekennzeichnet, daß es sich bei den funktionellen Gruppen um Carbonsäure-, Sulfonsäure-, Phosphonsäure-, saure Phosphorsäureester-, Hydroxy- oder primäre oder sekundäre Aminogruppen handelt.

14. Verfahren zur Herstellung von Homo- und Copolymerisaten von α-Olefinen durch Homo- oder Copolymerisation der betreffenden Monomeren durch kontinuierliches oder diskontinuierliches Einführen des oder der Monomeren in einen Reaktor, (Co)Polymerisieren des oder der Monomeren in dem Reaktor bei Temperaturen von 60 bis 125°C und Drükken von 5 bis 70 bar mittels eines übergangsmetallhaltigen Katalysators in Anwesenheit oder Abwesenheit eines Cokatalysators sowie in Gegenwart eines feinteiligen Feststoffs in der gewirbelten oder gerührten Gasphase in einem durchmischten Schüttgutbett aus kleinteiligem (Co)Polymerisat und/oder in Suspension in einem Suspensionsmittel mit turbulenter Strömung und Austragen der resultierenden (Co)Polymerisate aus dem Reaktor, dadurch gekennzeichnet, daß man als Feststoff den Feststoff gemäß einem der Ansprüche 1 bis 8 verwendet.

## Claims

1. A solid based on
A) at least one at least divalent metal alkyl and
B) a finely divided, porous and mechanically stable support which, in the unloaded state, has on its surface functional groups which can bring about chemical bonding between the metal atoms of the metal alkyl A and the surface of the support but which is otherwise chemically inert,
wherein
a) the metal atoms derived from the metal alkyls A are chemically bonded to the surface of the support B,
b) metal alkyl groups are still present and
c) no metal alkyl which could be extracted with an inert organic solvent for metal alkyls A is present.

2. A solid as claimed in claim 1, wherein the metal atoms of the metal alkyl A are present chemically bonded in an amount of from 10 to 100 mol % based on the functional groups originally present on the surface of the support B.

3. A solid as claimed in claim 1 or 2, wherein the metal alkyls A are the alkyls of beryllium, magnesium, calcium, strontium, barium, zinc, boron, aluminum, gallium, indium, thallium, silicon, germanium, tin and lead.

4. A solid as claimed in any of claims 1 to 3, wherein the functional groups present on the surface of the support B are groups containing active hydrogen.

5. A solid as claimed in claim 4, wherein the functional groups are carboxylic acid, sulfonic acid, phosphonic acid, phosphoric acid, hydroxyl or primary or secondary amino groups.

6. A solid as claimed in any of claims 1 to 5, wherein the support B has an average particle size in the range from 10 µm to 1.0 mm.

7. A solid as claimed in any of claims 1 to 6, wherein the supports B are polymeric organic or polymeric and/or crystalline inorganic substances.

8. A solid as claimed in claim 7, wherein the polymeric organic substances are modified or unmodified cellulose or starch, modified or unmodified lignin, synthetic polymers which contain carboxylic acid, sulfonic acid, phosphonic acid, acidic phosphoric ester, hydroxyl and/or primary or secondary amino groups, and the polymeric and/or crystalline inorganic substances are aluminas, alumina hydrates, aluminum phosphates, silica, metal silicates or the dioxide of titanium, zirconium or hafnium.

9. The use of the solids as claimed in any of claims 1 to 8 for purifying liquid and gaseous substances and for cleaning chemical reactors in which air- and/or water-sensitive substances are reacted.

10. A process for preparing a solid as claimed in claim 1 based on
A) at least one at least divalent metal alkyl and
B) a finely divided, porous and mechanically stable support which, in the unloaded state, has on its surface functional groups which can bring about chemical bonding between the metal atoms of the metal alkyl A and the surface of the support but which is otherwise chemically inert,
by
1) applying at least one liquid or dissolved metal alkyl A to the dry or suspended support B,
2) isolating,
3) washing and
4) drying the resulting solid,
which comprises
α) before step 1 carrying out spectroscopic and/or chemical determination of the concentration of the functional groups on the surface of the support B,
β) in step 1 reacting from 10 to a maximum of 100 mol %, based on the number of functional groups found, of metal alkyl A and
γ) after step 4 checking whether extractable metal alkyl A is still present in the resulting solid and, if this is the case, repeating steps 3 and 4, several times if required, or binding the extractable metal alkyl A with a support B which is added to the solid.

11. A process as claimed in claim 10, wherein the metal alkyls A are the alkyls of beryllium, magnesium, calcium, strontium, barium, zinc, boron, aluminum, gallium, indium, thallium, silicon, germanium, tin and lead.

12. A process as claimed in claim 10 or 11, wherein the functional groups present on the surface of the support B are groups containing active hydrogen.

13. A process as claimed in claim 12, wherein the functional groups are carboxylic acid, sulfonic acid, phosphonic acid, acidic phosphoric ester, hydroxyl or primary or secondary amino groups.

14. A process for preparing homo- and copolymers of α-olefins by homo- or copolymerization of the relevant monomers by continuous or batchwise introduction of the monomer or monomers into a reactor, (co)polymerization of the monomer or monomers in the reactor at from 60 to 125°C under from 5 to 70 bar using a transition metal-containing catalyst in the presence or absence of a cocatalyst and in the presence of a finely divided solid in turbulent or agitated gas phase in a mixed bed of small-particle (co)polymer and/or in suspension in a suspending agent with turbulent flow and discharge of the resulting (co)polymers from the reactor, wherein the solid as claimed in any of claims 1 to 8 is used as solid.

## Revendications

1. Matière solide à base
A) d'au moins un métal-alkyle au moins bivalent et
B) d'un support en fines particules, poreux et stable mécaniquement qui porte à sa surface, à l'état non chargé, des groupements fonctionnels qui peuvent produire une liaison chimique entre les atomes de métal du métal-alkyle A et la surface du support, mais qui, à part cela, est chimiquement inerte,
caractérisée en ce que, dans la matière solide,
a) les atomes de métal provenant des métal-alkyles A sont liés chimiquement à la surface du support B,
b) des groupements métal-alkyle sont encore présents et
c) il n'est plus présent de métal-alkyle qui pourrait être extrait à l'aide d'un solvant organique inerte pour les métal-alkyles A.

2. Matière solide selon la revendication 1, caractérisée en ce qu'elle contient en liaison chimique les atomes de métal du métal-alkyle A dans une proportion de 10 à 100% en moles, par rapport aux groupements fonctionnels présents initialement à la surface du support B.

3. Matière solide selon la revendication 1 ou 2, caractérisée en ce qu'il s'agit, en ce qui concerne les métal-alkyles A, de composés alkyliques de béryllium, de magnésium, de calcium, de strontium, de baryum, de zinc, de bore, d'aluminium, de gallium, d'indium, de thallium, de silicium, de germanium, d'étain et de plomb.

4. Matière solide selon l'une quelconque des revendications 1 à 3, caractérisée en ce qu'il s'agit, en ce qui concerne les groupements fonctionnels présents à la surface du support B, de groupements contenant de l'hydrogène actif.

5. Matière solide selon la revendication 4, caractérisée en ce qu'il s'agit, en ce qui concerne les groupements fonctionnels, de groupements acide carboxylique, acide sulfonique, acide phosphonique, acide phosphorique, hydroxy ou amino primaire ou secondaire.

6. Matière solide selon l'une quelconque des revendications 1 à 5, caractérisée en ce que le support B présente une grosseur de grain dans la plage de 10 µm à 1,0 mm.

7. Matière solide selon l'une quelconque des revendications 1 à 6, caractérisée en ce qu'il s'agit, en ce qui concerne les supports B, de substances organiques polymères ou inorganiques polymères et/ou cristallines.

8. Matière solide selon la revendication 7, caractérisée en ce qu'il s'agit, en ce qui concerne les substances organiques polymères, de cellulose ou d'amidon modifié ou non modifié, de lignine modifiée ou non modifiée, de polymères synthétiques contenant des groupements acide carboxylique, acide sulfonique, acide phosphonique, ester acide d'acide phosphorique, hydroxy et/ou amino primaire ou secondaire et, en ce qui concerne les substances inorganiques polymères et/ou cristallines, d'oxydes d'aluminium, d'hydrates d'oxyde d'aluminium, de phosphates d'aluminium, d'acide silicique, de silicates métalliques ou de dioxyde de titane, de zirconium ou de hafnium.

9. Utilisation des matières solides selon l'une quelconque des revendication 1 à 8 pour la purification de substances liquides et gazeuses, ainsi que pour le nettoyage de réacteurs chimiques dans lesquels des substances sensibles à l'air et/ou à l'eau sont mises en réaction entre elles.

10. Procédé de préparation d'une matière solide selon la revendication 1 à base
A) d'au moins un métal-alkyle au moins bivalent et
B) d'un support en fines particules, poreux et stable mécaniquement qui porte à sa surface, à l'état non chargé, des groupements fonctionnels qui peuvent produire une liaison chimique entre les atomes de métal du métal-alkyle A et la surface du support, mais qui, à part cela, est chimiquement inerte,
par
1) application d'au moins un métal-alkyle A liquide ou en solution sur le support B séché ou mis en suspension,
2) isolement,
3) lavage et
4) séchage de la matière solide résultante,
caractérisé en ce que
α) avant l'étape 1> du procédé, on détermine par spectroscopie et/ou par analyse chimique la concentration des groupements fonctionnels sur la surface du support B,
β) dans l'étape 1) du procédé, on met à réagir de 10 à 100% en moles au maximum de métal-alkyle A, par rapport au nombre déterminé des groupements fonctionnels,
γ) après l'étape 4) du procédé, on vérifie s'il y a encore du métal-alkyle A susceptible d'être extrait dans la matière solide obtenue et, si tel est le cas, on répète - au besoin plusieurs fois - les étapes 3) et 4) du procédé ou on fixe le métal-alkyle A susceptible d'être extrait à un support B qui est ajouté à la matière solide.

11. Procédé selon la revendication 10, caractérisé en ce qu'il s'agit, en ce qui concerne les métal-alkyles A, de composés alkyliques de béryllium, de magnésium, de calcium, de strontium, de baryum, de zinc, de bore, d'aluminium, de gallium, d'indium, de thallium, de silicium, de germanium, d'étain et de plomb.

12. Procédé selon la revendication 10 ou 11, caractérisé en ce qu'il s'agit, en ce qui concerne les groupements fonctionnels présents sur la surface du suppnrt B, de groupements contenant de l'hydrogène actif.

13. Procédé selon la revendication 12, caractérisé en ce qu'il s'agit, en ce qui concerne les groupements fonctionnels, de groupements acide carboxylique, acide sulfonique, acide phosphonique, ester acide d'acide phosphorique, hydroxy ou amino primaire ou secondaire.

14. Procédé de préparation d'homo- et de copolymères d'α-oléfines par homo- ou copolymérisation des monomères en question par introduction continue ou discontinue du ou des monomères dans un réacteur, (co)polymérisation du ou des monomères dans le réacteur à des températures de 60 à 125°C et sous des pressions de 5 à 70 bar, au moyen d'un catalyseur contenant un métal de transition, en présence ou en l'absence d'un co-catalyseur, ainsi qu'en présence d'une matière solide finement divisée, en phase gazeuse mise en mouvement tourbillonnaire ou agitée dans un lit de matière en vrac mélangée intimement composé de co(polymère) en petites particules et/ou en suspension dans un milieu de suspension, avec écoulement turbulent et évacuation des (co)polymères résultants à partir du réacteur, caractérisé en ce que l'on utilise, comme matière solide, la matière solide selon l'une quelconque des revendications 1 à 8.
